(19) Europäisches Patentamt
European Patent Office
Office européen des brevets

(11) **EP 2 413 642 B1**

(12) **FASCICULE DE BREVET EUROPEEN**

(45) Date de publication et mention de la délivrance du brevet:
**16.05.2018 Bulletin 2018/20**

(51) Int Cl.:
**H04W 52/26** $^{(2009.01)}$

(21) Numéro de dépôt: **11173774.8**

(22) Date de dépôt: **13.07.2011**

(54) **MÉTHODE DISTRIBUÉE D'ALLOCATION DE PUISSANCE SOUS CONTRAINTE DE QUALITÉ DE SERVICE**

**DEZENTRALISIERTES VERFAHREN ZUR LEISTUNGSALLOKATION UNTER EINSCHRÄNKUNG DURCH DIENSTQUALITÄT**

**DISTRIBUTED METHOD OF ALLOCATION OF POWER UNDER CONSTRAINTS OF QUALITY OF SERVICE**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.07.2010 FR 1056113**

(43) Date de publication de la demande:
**01.02.2012 Bulletin 2012/05**

(73) Titulaire: **Commissariat à l'Énergie Atomique et aux Énergies Alternatives 75015 Paris (FR)**

(72) Inventeurs:
• **Abgrall, Cédric**
  **38100 Grenoble (FR)**
• **Calvanese Strinati, Emilio**
  **38000 Grenoble (FR)**

(74) Mandataire: **Augarde, Eric et al Brevalex 56 Boulevard de l'Embouchure, Bât. B B.P. 27519 31075 Toulouse Cedex 2 (FR)**

(56) Documents cités:
WO-A1-2007/126346     WO-A1-2010/064110
WO-A2-2006/127314     US-A1- 2008 159 215

• JONG-SHI PANG ET AL: "Distributed Power Allocation With Rate Constraints in Gaussian Parallel Interference Channels", IEEE TRANSACTIONS ON INFORMATION THEORY, IEEE, US LNKD- DOI:10.1109/TIT.2008.926399, vol. 54, no. 8, 1 août 2008 (2008-08-01), pages 3471-3489, XP011231453, ISSN: 0018-9448
• SIAMAK SOROOSHYARI ED - ANONYMOUS: "On Distributed Power Allocation for Rate-Constrained Wireless Networks", INFORMATION SCIENCES AND SYSTEMS, 2006 40TH ANNUAL CONFERENCE ON, IEEE, PI, 1 mars 2006 (2006-03-01), pages 474-474, XP031011875, ISBN: 978-1-4244-0349-3

**Description**

**DOMAINE TECHNIQUE**

La présente invention concerne de manière générale le domaine des systèmes des télécommunications sans fil et plus particulièrement une méthode d'allocation de puissance dans un tel système.

**ÉTAT DE LA TECHNIQUE ANTÉRIEURE**

Un des problèmes affectant une communication au sein d'un système de télécommunication cellulaire est celui de l'interférence générée par les autres communications de la cellule ou des cellules voisines. On distingue classiquement l'interférence inter-cellulaire due aux communications des cellules voisines et l'interférence intra-cellulaire due aux communications de la même cellule où se trouve le terminal.

De nombreuses techniques ont été proposées et mises en oeuvre pour réduire l'interférence intra-cellulaire. La plupart de ces techniques reposent sur une allocation de ressources de transmission orthogonales, par exemple d'intervalles de temps de transmission (TDMA), de fréquences de transmission (FDMA), d'intervalles de sous-porteuses d'un multiplex OFDM (OFDMA), de codes de transmission (CDMA), de faisceaux de transmission (SDMA), voire d'une combinaison de telles ressources, de manière à séparer les différentes communications d'une même cellule.

Les ressources de transmission étant rares, celles-ci sont généralement réutilisées, au moins partiellement, d'une cellule à l'autre. Un module de gestion des ressources de transmission ou RRM (*Radio Resource Management*) est alors en charge d'allouer de manière statique ou dynamique les ressources de transmission aux différentes cellules. Il est notamment connu de réutiliser de manière statique des fréquences de transmission selon un schéma bi-dimensionnel *(Frequency Reuse Pattern)*.

Du fait de la réutilisation des ressources de transmission, une première communication entre un premier terminal et une première station de base d'une cellule peut être interférée par une seconde communication, utilisant la même ressource de transmission, entre un second terminal et une seconde station de base d'une cellule voisine. La situation est encore davantage critique lorsque les cellules sont adjacentes et les terminaux sont en bordure de cellule. Dans ce cas, les terminaux doivent émettre à pleine puissance et le niveau d'interférence est alors élevé.

Pour une communication donnée, dite ici première communication, on appelle communément interférence intra-bande l'interférence induite par une seconde communication utilisant la même ressource de transmission que la première. Par opposition, on appelle interférence inter-bande celle induite par une seconde communication utilisant une ressource de transmission distincte (par exemple une fréquence de transmission voisine ou un autre intervalle de transmission) de celle utilisée par la première.

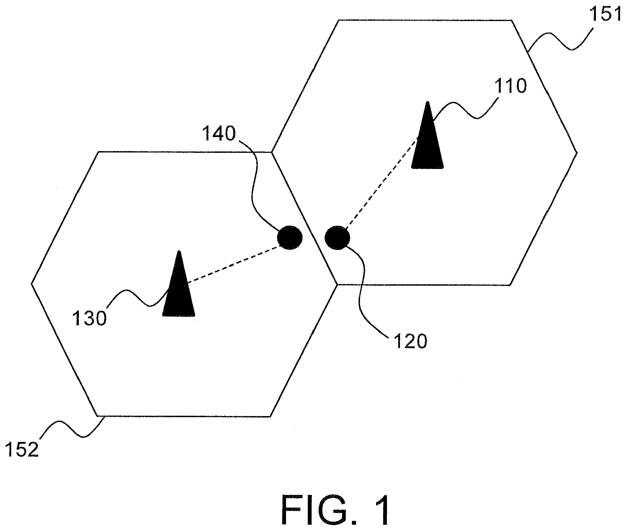

La Fig. 1 représente un système de télécommunication cellulaire très simplifié, comprenant deux cellules 151 et 152. La première cellule 151 contient un premier couple de terminaux constitué d'un premier terminal émetteur 110 et d'un premier terminal récepteur 120. De manière similaire, la seconde cellule 152 comprend un second couple de terminaux constitué d'un second terminal émetteur 130 et d'un second terminal récepteur 140. Par terminal, on entend ici un terminal mobile ou une station de base, voire un terminal relais dans le cas d'un canal relayé. En particulier, on comprendra que l'on considère ici aussi bien les communications sur voie montante (*uplink*) que sur voie descendante (*downlink*). On suppose en outre que la première communication entre les terminaux 110 et 120, utilise la ou les même(s) ressource(s) de transmission que la seconde transmission entre les terminaux 130 et 140 de sorte que les deux communications interfèrent entre elles.

Le traitement et la réduction de l'interférence inter-cellulaire ont fait l'objet de très nombreuses recherches.

La méthode de traitement la plus simple est de considérer l'interférence comme un simple bruit thermique. Cette méthode de traitement n'est toutefois acceptable que si le niveau d'interférence est faible. Il est à noter que la plupart des algorithmes d'allocation de puissance (*power allocation*) sont basés sur cette hypothèse.

D'autres méthodes de traitement permettent de réduire l'interférence en décodant le signal d'information de la (ou les) communication(s) interférente(s). Cela suppose que le terminal récepteur considéré connaisse les codes ayant servi à les coder. Parmi ces méthodes, on connaît notamment les schémas de réduction d'interférence de type parallèle ou PIC (*Parallel Interference Canceller*) ou série (*Successive Interférence Canceller*), bien connus de l'homme du métier.

Une autre approche classique pour réduire le niveau d'interférence est de mettre en oeuvre une méthode adaptative d'allocation de puissance (*adaptive power control*). Une telle méthode permet de contrôler les niveaux de puissance des différents terminaux émetteurs de manière à garantir une qualité de service prédéterminée aux différents utilisateurs. Cette qualité de service peut être mesurée selon le cas en termes de débit, de temps de latence, de taux d' erreur paquet, de couverture spatiale, etc. On appelle conventionnellement métrique de qualité de service, le ou les paramètre(s) utilisé(s) pour la mesurer. En règle générale, une communication d'un utilisateur requiert une qualité de service minimale qui est prise en compte ou négociée lors de la procédure d'admission de l'utilisateur dans la cellule. Cette qualité de service minimale s'exprime sous la forme d'une contrainte sur la métrique de qualité de service : latence inférieure à un seuil, débit supérieur à un minimum garanti, etc.. L'allocation de puissance est alors effectuée de manière à respecter la contrainte sur la métrique de qualité de service.

Enfin, l'allocation de puissance peut être prise en charge de manière centralisée (*Centralized Power Allocation*) par un noeud spécifique du réseau, NC (*Network Controller*), ou bien de manière distribuée (*Distributed Power Allocation*) au sein de chaque terminal. Le principal inconvénient de l'approche centralisée est de requérir la transmission par les terminaux d'une importante quantité d'information au noeud de contrôle, notamment celle relative aux coefficients de canal entre terminaux émetteur et terminaux récepteur ou CSI (*Channel State Indicator).*

Il est connu du document WO-A-2010/064110 une méthode d'allocation de puissance pour un système de télécommunication OFDM comprenant un premier couple de terminaux constitué d'un premier terminal émetteur et d'un premier terminal récepteur et d'un second couple de terminaux constitué d'un second terminal émetteur d'un second terminal récepteur, une première communication entre les terminaux du premier couple utilisant les mêmes ressources de transmission que les terminaux du second couple, de sorte que les deux communications interfèrent entre elles, la première communication devant respecter un premier débit de consigne et la seconde communication devant respecter un second débit de consigne.

Une méthode distribuée d'allocation de puissance est connue de l'article de Jong-Shi Pang et al. intitulé « Distributed power allocation with rates constraints in Gaussian parallel interference channels » publié dans IEEE Trans. on Information Theory, Vol. 54, N° 8, Août 2008, pages 3471-3489.

Les méthodes d'allocation de puissance, distribuée ou non, font généralement l'hypothèse que l'interférence est assimilable à du bruit thermique. Toutefois cette hypothèse est bien souvent pessimiste de sorte que les puissances d'émission allouées peuvent être sensiblement supérieures à celles qui seraient nécessaires pour obtenir la qualité de service souhaitée. Cette allocation conduit par conséquent à une consommation d'énergie inutile et, pour les communications montantes, à une réduction de l'autonomie des terminaux.

Un premier but de l'invention est par conséquent de proposer une méthode distribuée d'allocation de puissance qui permette de réduire les puissances d'émission des terminaux pour une contrainte de qualité de service donnée.

Un but subsidiaire de l'invention est de proposer une méthode distribuée d'allocation de puissance qui tienne compte des types d'interférence entre communications.

## EXPOSÉ DE L'INVENTION

La présente invention est définie par une méthode d'allocation de puissance selon la présente revendication 1. Des modes avantageux de réalisation de l'invention sont donnés dans les revendications dépendantes.

## BRÈVE DESCRIPTION DES DESSINS

D'autres caractéristiques et avantages de l'invention apparaîtront à la lecture d'un mode de réalisation préférentiel de l'invention, fait en référence aux figures jointes parmi lesquelles :

La Fig. 1 représente schématiquement une situation d'interférence inter-cellulaire intra-bande dans un système de communication cellulaire ;
La Fig. 2 représente schématiquement un modèle du système de communication cellulaire de la Fig. 1 ;
La Fig. 3 représente schématiquement un premier diagramme d'interférence pour une première communication ;
La Fig. 4 représente schématiquement un second diagramme d'interférence pour cette même communication ;
La Fig. 5 représente schématiquement un diagramme d'interférence pour une première et une seconde communications ;
La Fig. 6 représente schématiquement un ordinogramme de la méthode distribuée d'allocation de puissance selon un premier mode de réalisation de l'invention ;
La Fig. 7 représente la suite des points de fonctionnement des premier et second terminaux récepteur dans le diagramme de la Fig. 5 lorsque la méthode de la Fig. 6 est mise en oeuvre ;
La Fig. 8A représente schématiquement les échanges de messages entre terminaux émetteur et récepteur lorsque la méthode la Fig. 6 est mise en oeuvre ;
La Fig. 8B représente schématiquement les échanges de messages entre terminaux émetteur et récepteur lorsqu'une variante de la méthode de la Fig. 6 est mise en oeuvre.

## EXPOSÉ DÉTAILLÉ DE MODES DE RÉALISATION PARTICULIERS

Nous considérerons ici un système de communication sans fil comprenant une pluralité de couples de terminaux émetteur et de terminaux récepteur et supposerons qu'une communication entre les terminaux d'un couple peut interférer avec une communication entre les terminaux d'un autre couple, par exemple par ce que ces deux communications utilisent des ressources de transmission communes (interférence intra-bande). Le système de communication sans fil peut être par exemple un système de communication cellulaire ou un système de communication *ad hoc*.

Dans un but de simplification de la présentation, nous nous placerons tout d'abord dans le cas d'un système ne comportant que deux couples de terminaux, comme illustré en Fig. 1.

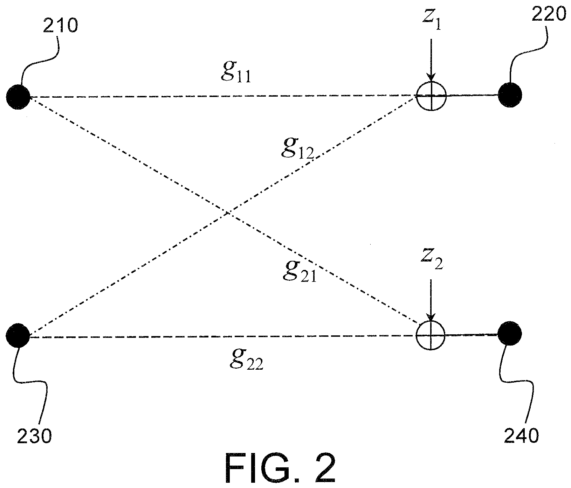

La Fig. 2 représente un modèle du système de télécommunication de la Fig. 1.

Si l'on note $x_1$, $x_2$ les signaux respectivement transmis par les terminaux émetteur 210 et 230 et $y_1$, $y_2$ les signaux respectivement reçus par les terminaux récepteurs 220 et 240, on a :

$$\begin{aligned} y_1 &= g_{11}x_1 + g_{12}x_2 + z_1 \\ y_2 &= g_{21}x_1 + g_{22}x_2 + z_2 \end{aligned} \qquad (1)$$

où $z_1$, $z_2$ sont des échantillons de bruit blanc gaussien, $g_{11}$, $g_{21}$ sont les coefficients de canal entre le terminal émetteur 210 et les terminaux récepteurs 220 et 240, respectivement et $g_{22}$, $g_{12}$ sont les coefficients de canal entre le terminal émetteur 230 et les terminaux récepteurs 240 et 220, respectivement.

On comprendra que l'interférence entre communications est représentée en (1) par les termes croisés.

Pour la première communication, les puissances respectives du signal d'information et de l'interférence due à la seconde communication sont respectivement $|g_{11}|^2 P_1$ et $|g_{12}|^2 P_2$.

On notera que ce modèle est similaire au modèle classique de canal multi-accès à deux utilisateurs dit MAC (Multiple Access Channel) tel que décrit par exemple dans l'article de Shih-Chun Chang et al. intitulé « Coding for T-User Multiple-Access Channels, » IEEE Transactions on Information Theory, vol. IT-25, no. 6, pp. 684-691, Nov. 1979.

Il en diffère cependant fondamentalement au sens où dans le modèle MAC, les terminaux récepteurs reçoivent une information utile et non de l'interférence sur les canaux « croisés ».

Le rapport signal à bruit (SNR) au niveau du premier récepteur peut s'exprimer sous la forme :

$$\gamma_1 = \left| g_{11} \right|^2 \frac{P_1}{N_0} \qquad (2)$$

De manière similaire, le rapport interférence à bruit au niveau du premier terminal récepteur n'est autre que :

$$\delta_1 = \left| g_{12} \right|^2 \frac{P_2}{N_0} \qquad (3)$$

De la même façon, les rapports signal à bruit et interférence à bruit au niveau du second terminal récepteur peuvent s'écrire respectivement comme :

$$\gamma_2 = \left| g_{22} \right|^2 \frac{P_2}{N_0} \qquad (4)$$

$$\delta_2 = \left| g_{21} \right|^2 \frac{P_1}{N_0} \qquad (5)$$

On remarquera que les relations suivantes sont vérifiées :

$$\delta_1 = f_2 \gamma_2 \qquad \text{et} \qquad \delta_2 = f_1 \gamma_1 \qquad (6)$$

où

$$f_1 = \frac{\left| g_{21} \right|^2}{\left| g_{11} \right|^2} \quad \text{et} \quad f_2 = \frac{\left| g_{12} \right|^2}{\left| g_{22} \right|^2} \; . \qquad (6')$$

On notera dans la suite $\rho_1$ et $\rho_2$ les débits respectifs sur la première et la seconde communications et l'on introduit les variables $C_1 = 2^{\rho_1}-1$, $C_2 = 2^{\rho_2}-1$, et $C_{12} = 2^{\rho_1+\rho_2}-1$.

Pour un couple de débits $(\rho_1, \rho_2)$ donnés, on peut distinguer plusieurs régimes d'interférence, chaque régime donnant lieu à un traitement distinct. Plus précisément, si l'on considère la première communication, on peut classer l'interférence en trois régimes possibles :

Schématiquement, dans un premier régime, la puissance de l'interférence due à la seconde communication est plus faible que la puissance du signal d'information reçue au niveau du premier terminal récepteur. Plus précisément, si l'on raisonne en termes de capacité au sens de Shannon, le rapport signal sur bruit plus interférence sur le canal direct entre le terminal émetteur 210 et le terminal récepteur 220 permet de passer le débit $\rho_1$ alors que le rapport signal sur bruit sur le canal « croisé » entre le terminal émetteur 230 et le terminal récepteur 220 ne permet pas de passer le débit $\rho_2$ (le canal « croisé » est en situation de coupure au sens de la théorie de l'information), autrement dit :

$$\rho_1 \leq \log_2\left(1 + SINR_{11}\right) = \log_2\left(1 + \frac{\gamma_1}{1 + \delta_1}\right) \qquad (7)$$

et

$$\rho_2 > \log_2\left(1 + INR_{12}\right) = \log_2\left(1 + \delta_1\right) \qquad (8)$$

où $SINR_{11}$ et $INR_{12}$ sont respectivement le rapport signal à bruit plus interférence et le rapport interférence sur bruit au niveau du premier terminal récepteur.

On déduit de (7) et (8) les contraintes sur $\delta_1$ et $\gamma_1$ relatives au premier régime :

$$\gamma_1 \geq C_1\left(1 + \delta_1\right) \qquad (9)$$

$$\delta_1 < C_2 \qquad (10)$$

A l'inverse, dans un troisième régime, la puissance de l'interférence est sensiblement supérieure à celle du signal d'information reçu par le premier terminal récepteur. Etant donné que l'interférence est due à la seconde communication, il est proposé de décoder d'abord le signal d'information de la seconde communication, d'estimer l'interférence due à cette communication et de la soustraire du signal reçu. Le signal d'information de la première communication est ensuite décodé du signal résultant, débarrassé de l'interférence.

Dans ce régime, on considère dans une première étape le signal de la première communication comme du bruit thermique et on décode le signal d'information de la seconde communication. On se retrouve par conséquent dans une situation symétrique de celle du premier régime et l'expression (7) est à remplacer par :

$$\rho_2 \leq \log_2\left(1 + SINR_{12}\right) = \log_2\left(1 + \frac{\delta_1}{1 + \gamma_1}\right) \qquad (11)$$

où $SINR_{12}$ est le rapport « signal sur bruit » au niveau du terminal récepteur 220 dans lequel on entend le signal comme le signal d'information de la seconde communication.

Dans une seconde étape, une fois la contribution de la seconde communication soustraite du signal reçu, on se retrouve dans le cas d'un signal simplement bruité par un bruit thermique, autrement dit :

$$\rho_1 \leq \log_2\left(1 + SNR_{11}\right) = \log_2\left(1 + \gamma_1\right) \qquad (12)$$

où $SNR_{11}$ est le rapport signal sur bruit après élimination de l'interférence due à la seconde communication.

Les expressions (11) et (12) se traduisent par les contraintes suivantes sur $\gamma_1$ et $\delta_1$ :

$$\gamma_1 \le \frac{\delta_1}{C_2} - 1 \qquad (13)$$

et

$$\gamma_1 \ge C_1 \qquad (14)$$

Enfin, dans un second régime, la puissance de l'interférence est du même ordre que celle du signal d'information. Il est alors proposé de décoder conjointement le signal d'information de la première communication et le signal d'information de la seconde communication au niveau du premier terminal récepteur. Le décodage conjoint des deux signaux d'information pourra, par exemple, être effectué au moyen d'un schéma PIC ou d'une méthode de décodage à maximum de vraisemblance de type MMSE-GDFE (Minimum Mean Square Error - Generalized Decision Feedback Equalizer), de manière connue en soi.

Ce régime d'interférence est intermédiaire entre le premier et le troisième dans la mesure où le débit $\rho_2$ ne vérifie plus (8) et (11), autrement dit :

$$\log_2\left(1 + \frac{\delta_1}{1 + \gamma_1}\right) < \rho_2 \le \log_2(1 + \delta_1) \qquad (15)$$

En revanche, le décodage conjoint suppose que les débits des première et seconde communications puissent être acheminés par le canal composé par le canal direct et le canal croisé, c'est-à-dire :

$$\rho_1 + \rho_2 \le \log_2(1 + \gamma_1 + \delta_1) \qquad (16)$$

On déduit de (15) et (16) les contraintes sur $\gamma_1$ et $\delta_1$ relatives au second régime :

$$C_2 \le \delta_1 < C_2(1 + \gamma_1) \qquad (17)$$

et

$$\gamma_1 \ge C_{12} - \delta_1 \qquad (18)$$

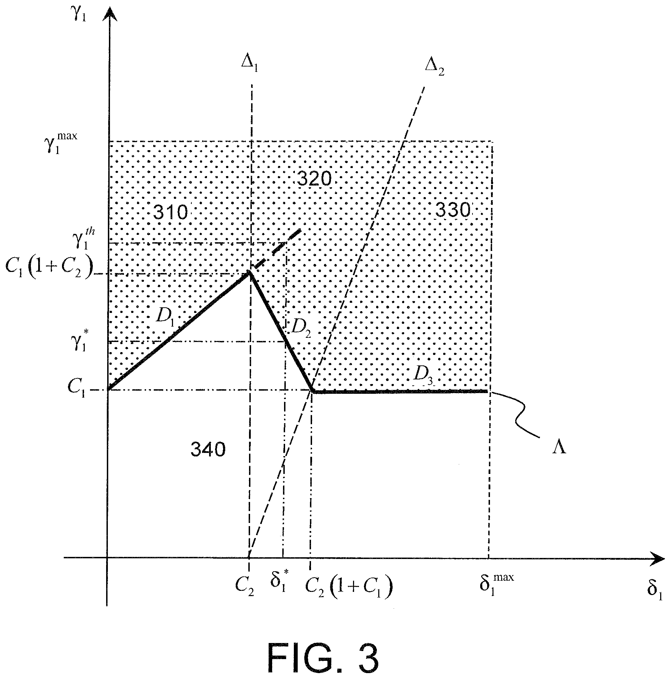

La Fig. 3 montre un diagramme d'interférence dans lequel on a représenté en abscisses le rapport interférence sur bruit $\delta_1$ et en ordonnées le rapport puissance sur bruit $\gamma_1$.

Ce diagramme est obtenu pour des valeurs données de débit $\rho_1$ et $\rho_2$, et par conséquent pour des valeurs données de $C_1, C_2, C_{12}$.

Le rapport $\gamma_1$ varie de 0 à $\gamma_1^{\max} = |g_{11}|^2 P_1^{\max} / N_0$ et le rapport $\delta_1$ varie de 0 à $\delta_1^{\max} = |g_{12}|^2 P_2^{\max} / N_0$ où $P_1^{\max}$ et $P_2^{\max}$ sont respectivement les puissances d'émission maximales des terminaux 210 et 230.

Les droites $\Delta_1$ et $\Delta_2$ définies par les équations $\delta_1 = C_2$ (cf. (10)) et $\gamma_1 = \dfrac{\delta_1}{C_2} - 1$ (cf. (13)) délimitent les trois régimes d'interférence. Les droites $D_1, D_2, D_3$, respectivement définies par les équations $\gamma_1 = C_1(1 + \delta_1)$ (cf. (9)) ; $\gamma_1 = C_{12} - \delta_1$ (cf. (18)) ; $\gamma_1 = C_1$ (cf. (14)) ; donnent la frontière inférieure de puissance, notée A, pour chacun de ces régimes. La zone 310 correspondant au premier régime d'interférence est délimitée par les droites $D_1$ et $\Delta_1$ ainsi que l'axe des ordonnées, celle correspondant au second régime d'interférence, 320, est délimitée par les droites $\Delta_1$, $\Delta_2$ et $D_2$, et enfin celle, 330, correspondant au troisième régime d'interférence est délimitée par $\Delta_2$ et $D_3$.

Au-dessous de la frontière inférieure A se trouve une quatrième zone 340 dans laquelle il n'est pas possible de traiter l'interférence pour la qualité de service demandée, ici pour les débits $\rho_1$ et $\rho_2$. On pourra alors utiliser une autre ressource de transmission, par exemple un autre intervalle de temps de transmission pour éliminer l'interférence entre les deux communications.

Si le débit de la première ou de la seconde communication varie, les paramètres des équations des droites $D_1, D_2, D_3$ et $\Delta_1, \Delta_2$ varient également et, par conséquent, les zones correspondant aux différents régimes d'interférence sont modifiées.

Pour des débits $\rho_1$ et $\rho_2$ donnés, on peut déterminer à partir d'une estimation, au niveau du récepteur, de la puissance du signal d'information, de la puissance de l'interférence et de celle du bruit thermique, dans quel régime d'interférence on se trouve, et effectuer le traitement afférent à cette zone.

En outre, comme indiqué sur la figure, pour des débits $\rho_1$ et $\rho_2$ donnés, on peut déterminer pour chaque puissance d'interférence, $\delta_1^*$, la plus faible valeur de $\gamma_1$, désignée ici par $\gamma_1^*$, permettant de traiter cette interférence. Autrement dit, pour une puissance d'émission du terminal 230 donnée, on peut allouer au terminal émetteur 210 la puissance minimale $P_1^* = \dfrac{N_0}{\left|g_{11}\right|^2}\gamma_1^*$. On remarquera que si l'on se trouve dans la zone 320 ou 330, cette valeur de puissance allouée est bien inférieure à celle, désignée ici par $\gamma_1^{th}$, qu'il aurait été nécessaire d'allouer si l'on avait assimilé l'interférence à du simple bruit thermique.

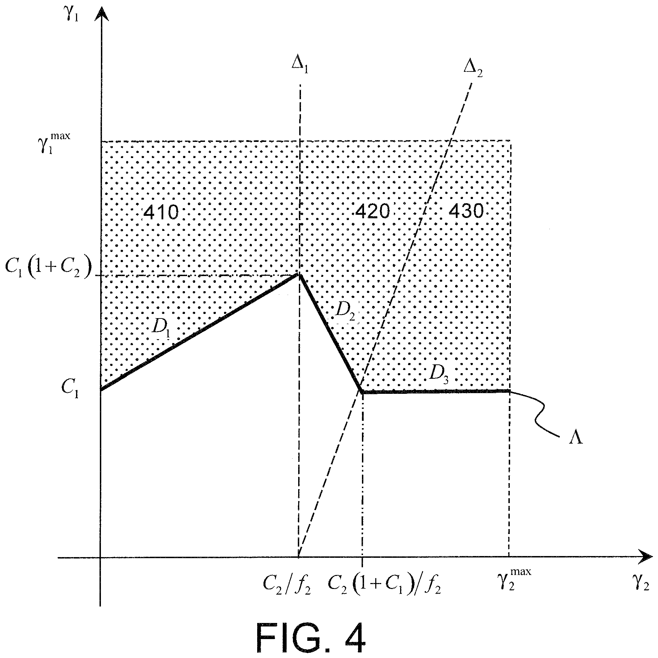

La Fig. 4 montre un diagramme d'interférence dans lequel on a représenté cette fois-ci en abscisses le rapport puissance sur bruit $\gamma_2$ et en ordonnées le rapport puissance sur bruit $\gamma_1$.

Le rapport $\gamma_1$ varie de 0 à $\gamma_1^{\max} = \left|g_{11}\right|^2 P_1^{\max}\big/N_0$ et le rapport $\gamma_2$ varie de 0 à $\gamma_2^{\max} = \left|g_{22}\right|^2 P_2^{\max}\big/N_0$.

Les inégalités (9), (13) et (18) peuvent être réécrites en fonction de rapports $\gamma_1$ et $\gamma_2$ :

$$\gamma_1 \geq C_1\left(1 + f_2\gamma_2\right) \qquad\qquad (19)$$

$$\gamma_1 \leq \frac{f_2}{C_2}\gamma_2 - 1 \qquad\qquad (20)$$

$$\gamma_1 \geq C_{12} - f_2\gamma_2 \qquad\qquad (21)$$

De manière similaire à la Fig. 3, les droites $\Delta_1$ et $\Delta_2$ définies par les équations $\gamma_2 = C_2/f_2$ (cf. (10)) et $\gamma_1 = \dfrac{f_2}{C_2}\gamma_2 - 1$ (cf. (20)), délimitent les trois régimes d'interférence et les droites $D_1, D_2, D_3$, respectivement définies par les équations $\gamma_1 = C_1(1+f_2\gamma_2)$ (cf. (19)) ; $\gamma_1 = C_{12}-f_2\gamma_2$ (cf. (21)); $\gamma_1 = C_1$ (cf. (14)); donnent la frontière inférieure de puissance, $\Lambda$. Les zones correspondant aux différents régimes d'interférence sont désignées par 410, 420 et 430.

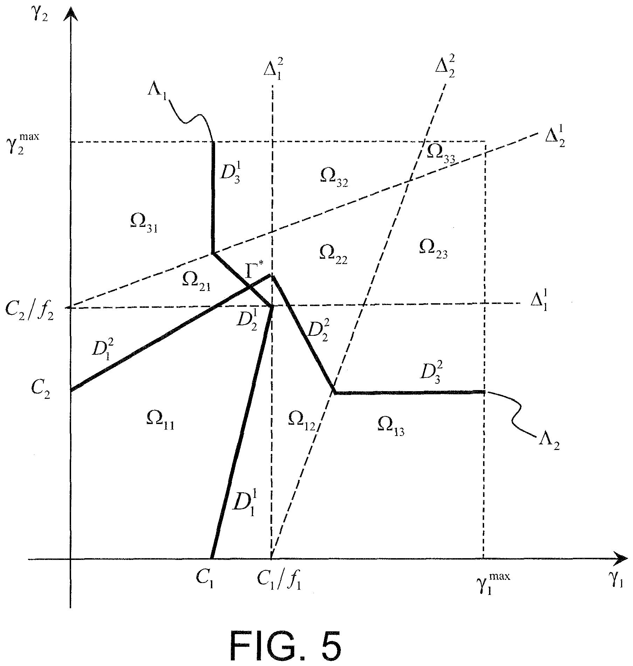

La Fig. 5 représente un diagramme d'interférence identique à celui de la Fig. 4 dans lequel on a indiqué les différents régimes d'interférence pour les deux communications. Le rapport signal à bruit $\gamma_1$ est porté en abscisses et le rapport signal à bruit $\gamma_2$ en ordonnées. On obtient neuf zones distinctes, obtenues par intersection des trois zones relatives à la première communication et des trois zones relatives à la seconde communication. Ces neuf zones sont notées $\Omega_{pq}$, $1 \leq p \leq 3$, $1 \leq q \leq 3$, où $p$ et $q$ indexent respectivement le régime d'interférence de la première et de la seconde communications. Les différentes zones sont délimitées par les droites $\Delta_1^1, \Delta_2^1, \Delta_1^2, \Delta_2^2$, $D_1^1, D_2^1, D_3^1$, et $D_1^2, D_2^2, D_3^2$ où l'indice supérieur indique ici la communication.

Les frontières inférieures, $\wedge_1$ et $\wedge_2$, relatives aux deux communications, se coupent en un point $\Gamma^* = \left(\gamma_1^*, \gamma_2^*\right)$. Pour des débits de communication $\rho_1$ et $\rho_2$ donnés, le point $\Gamma^*$ correspond à l'allocation de puissance minimale. De manière générale, la zone $\Omega_{p^*q^*}$ dans laquelle se trouve le point $\Gamma^*$ fournit les régimes d'interférence $p^*, q^*$ des deux communications et par conséquent les types de traitement correspondants. On remarquera que dans le cas illustré, c'est la zone $\Omega_{21}$ qui contient le point de fonctionnement, autrement dit pour le décodage du signal d'information de la première communication, on procèdera à un décodage conjoint, et pour le décodage du signal d'information de la seconde communication, la première communication sera assimilée à du bruit thermique.

Pour chaque communication i=1,2, on note $\left( \omega_1^i,\ \omega_2^i,\ \omega_3^i \right)$ la partition du diagramme d'interférence définie par :

$$\omega_1^i \triangleq \left\{ (\gamma_i, \gamma_j) \big| 0 < \gamma_j < C_j / f_j \right\} \tag{22}$$

$$\omega_2^i \triangleq \left\{ (\gamma_i, \gamma_j) \big| \ C_j / f_j \leq \gamma_j \leq (\gamma_i + 1) C_j / f_j \right\} \tag{23}$$

$$\omega_3^i \triangleq \left\{ (\gamma_i, \gamma_j) \big| \gamma_j > (\gamma_i + 1) C_j / f_j \right\} \tag{24}$$

où $j \neq i$ est l'indice de la communication interférente.

Cette partition s'exprime de manière équivalente au moyen des coordonnées $(\gamma_i, \delta_i)$ :

$$\omega_1^i \triangleq \left\{ (\gamma_i, \delta_i) \big| \delta_i < C_j \right\} \tag{22'}$$

$$\omega_2^i \triangleq \left\{ (\gamma_i, \delta_i) \big| \ C_j \leq \delta_i \leq (\gamma_i + 1) C_j \right\} \tag{23'}$$

$$\omega_3^i \triangleq \left\{ (\gamma_i, \delta_i) \big| \delta_i > (\gamma_i + 1) C_j \right\} \tag{24'}$$

Dans tous les cas, la partition du diagramme d'interférence pour l'ensemble des deux communications est obtenue au moyen des intersections :

$$\Omega_{pq} = \omega_p^1 \cap \omega_q^2 \tag{25}$$

Chaque zone est associée à un régime d'interférence (indexé par $p$) de la première communication et à un régime d'interférence (indexé par $q$) de la seconde communication.

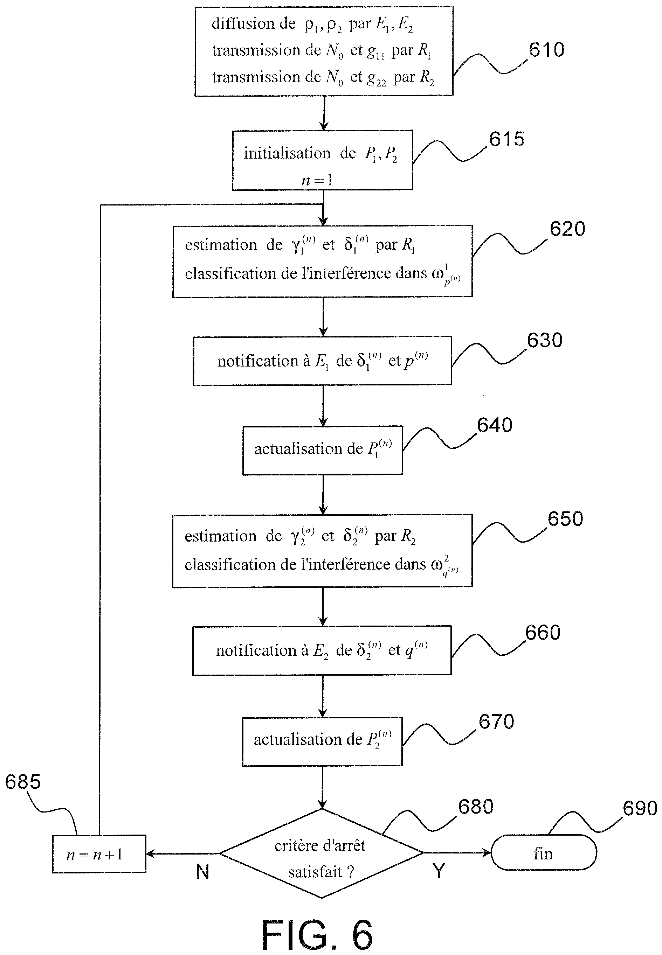

La Fig. 6 représente une méthode distribuée d'allocation de puissance selon un premier mode de réalisation de l'invention. Ce mode de réalisation suppose que deux couples de terminaux $T_1 = (E_1, R_1)$, $T_2 = (E_2, R_2)$ aient été préalablement sélectionnés parce que leurs communications interfèrent entre elles.

La méthode d'allocation de puissance procède de manière itérative, chaque itération étant composée d'une première demi-itération effectuée par un des deux couples de terminaux et d'une seconde demi-itération effectuée par l'autre couple.

Plus précisément, dans une première étape, 610, les terminaux émetteur $E_1$ et $E_2$ diffusent les valeurs de débit de consigne $\rho_1, \rho_2$ ou, de manière équivalente, les valeurs des variables $C_1$ et $C_2$ aux autres terminaux. Les terminaux récepteur $R_1$ et $R_2$ procèdent à une estimation du bruit thermique $N_0$ et à une estimation de canal. Le terminal $R_1$ transmet au terminal $E_1$ les valeurs $N_0$ et $g_{11}$. De même, le terminal $R_2$ transmet au terminal $E_2$ les valeurs $N_0$ et $g_{22}$.

Dans un seconde étape, 615, les puissances d'émission des terminaux émetteur $E_1$ et $E_2$ sont initialisées à des valeurs données, $P_1^{(0)}$ et $P_2^{(0)}$, par exemple aux valeurs maximales de puissance d'émission $P_1^{\max}$ et $P_2^{\max}$. L'indice $n$ donnant le nombre d'itérations est initialisé à 1. On se place dans la suite à la $n^{\text{ième}}$ itération.

A l'étape 620, le terminal récepteur $R_1$ estime le rapport signal sur bruit, $\gamma_1^{(n)}$, et le rapport interférence sur bruit $\delta_1^{(n)}$, à l'aide de séquences de symboles pilote transmises par exemple tour à tour par le terminal $E_1$ et le terminal $E_2$. Le terminal $R_1$ classifie l'interférence, c'est-à-dire détermine dans quelle zone $\omega_{p^{(n)}}^1$ se trouve le point de fonctionnement $\left( \gamma_1^{(n)}, \delta_1^{(n)} \right)$.

A l'étape 630, le terminal $R_1$ notifie au terminal $E_1$ la valeur du rapport interférence sur bruit $\delta_1^{(n)}$ et le régime d'interférence correspondant, $p^{(n)}$. Cette notification est effectuée à l'aide d'un message spécifique. Selon une variante, seule la valeur du rapport interférence sur bruit $\delta_1^{(n)}$ est notifiée au terminal $E_1$, ce dernier se chargeant alors de la classification et de la détermination de l'indice $p^{(n)}$.

A l'étape 640, le terminal $E_1$ actualise la puissance d'émission $P_1^{(n)}$ en fonction de $\delta_1^{(n)}$ et $P^{(n)}$. Plus précisément, la puissance $P_1^{(n)}$ est obtenue au moyen de la fonction $\lambda_1$ donnant la borne inférieure de puissance, définie par intervalles :

$$\lambda_1\left(\delta_1^{(n)}\right) = C_1\left(1+\delta_1^{(n)}\right) \quad \text{pour} \quad \delta_1^{(n)} \in \omega_1^1$$

$$\lambda_1\left(\delta_1^{(n)}\right) = C_{12} - \delta_1^{(n)} \quad \text{pour} \quad \delta_1^{(n)} \in \omega_2^1$$

$$\lambda_1\left(\delta_1^{(n)}\right) = C_1 \quad \text{pour} \quad \delta_1^{(n)} \in \omega_3^1 \tag{26}$$

au moyen de :

$$P_1^{(n)} = \lambda_1\left(\delta_1^{(n)}\right)\frac{N_0}{\left|g_{11}\right|^2} \tag{27}$$

Selon une variante, le calcul de l'étape 640 est effectué par le terminal récepteur $R_1$ et le résultat de (27) est ensuite transmis au terminal $E_1$. Dans ce cas, le terminal récepteur $R_1$ n'a pas à transmettre la puissance du bruit thermique $N_0$ et le coefficient de canal $g_{11}$ à l'étape 610. Quelle que soit l'option retenue, le terminal $E_1$ émet à la puissance d'émission actualisée $P_1^{(n)}$.

On comprendra que les étapes 620 à 640 correspondent à la première demi-itération.

A l'étape 650, le terminal récepteur $R_2$ estime le rapport signal sur bruit, $\gamma_2^{(n)}$, ainsi que le rapport interférence sur bruit $\delta_2^{(n)}$, au moyen de séquences de symboles pilote, transmises par exemple tour à tour par le terminal $E_2$ et le terminal $E_1$. Le terminal $R_2$ en déduit dans quelle zone $\omega_{q^{(n)}}^2$ se trouve le point de fonctionnement $\left(\gamma_2^{(n)}, \delta_2^{(n)}\right)$.

A l'étape 660, le terminal $R_2$ notifie au terminal $E_2$ la valeur du rapport interférence sur bruit $\delta_2^{(n)}$ et le régime d'interférence correspondant, $q^{(n)}$.

A l'étape 670, le terminal $E_2$ actualise la puissance d'émission $P_2^{(n)}$ en fonction de $\delta_2^{(n)}$ et $q^{(n)}$. Plus précisément, la puissance $P_2^{(n)}$ est obtenue au moyen de la fonction $\lambda_2$ donnant la borne inférieure de puissance, définie par intervalles :

$$\lambda_2\left(\delta_2^{(n)}\right) = C_2\left(1+\delta_2^{(n)}\right) \quad \text{pour} \quad \delta_2^{(n)} \in \omega_1^2$$

$$\lambda_2\left(\delta_2^{(n)}\right) = C_{12} - \delta_2^{(n)} \quad \text{pour} \quad \delta_2^{(n)} \in \omega_2^2$$

$$\lambda_2\left(\delta_2^{(n)}\right) = C_2 \quad \text{pour} \quad \delta_2^{(n)} \in \omega_3^2 \tag{28}$$

au moyen de :

$$P_2^{(n)} = \lambda_2\left(\delta_2^{(n)}\right)\frac{N_0}{\left|g_{22}\right|^2} \tag{29}$$

Selon la variante précitée, le calcul de l'étape 670 est effectué par le terminal récepteur $R_2$ et le résultat de (29) est ensuite transmis au terminal $E_2$. Dans ce cas, le terminal récepteur $R_2$ n'a pas à transmettre la puissance du

bruit thermique $N_0$ et le coefficient de canal $g_{22}$ à l'étape 610. Quelle que soit l'option retenue, le terminal $E_2$ émet à la puissance d'émission actualisée $P_2^{(n)}$.

On comprendra que les étapes 650 à 670 correspondent à la seconde demi-itération.

Au terme des deux demi-itérations, on vérifie en 680 si un critère d'arrêt est satisfait. Ce critère peut être par exemple libellé sous la forme d'un nombre maximum d'itérations Raz au-delà duquel l'algorithme s'arrête. Alternativement le critère d'arrêt pourra être exprimé sous la forme d'une mesure de convergence. Par exemple, si l'on note $P_k^{(n)}$, $k$=1,2, la puissance d'émission allouée au terminal émetteur $E_k$ à l'itération $n$, ce critère pourra être exprimé par :

$$\left\| \mathbf{P^{(n+1)}} - \mathbf{P^{(n)}} \right\| \leq \varepsilon \qquad\qquad (30)$$

où $\mathbf{P}^{(n)}$ est le vecteur des puissances allouées aux terminaux émetteur à l'itération $n$, à savoir $\mathbf{P^{(n)}} = \left( P_1^{(n)}, P_2^{(n)} \right)^T$ et $\varepsilon$ est un seuil prédéterminé. Le critère d'arrêt pourra être encore une combinaison des deux critères précédents, au sens où les itérations seront arrêtées dès lors que l'un ou l'autre des critères sera satisfait.

Si le critère d'arrêt est satisfait, l'allocation de puissance se termine en 690. A défaut, on incrémente le compteur d'itérations en 685 et on retourne à l'étape 620.

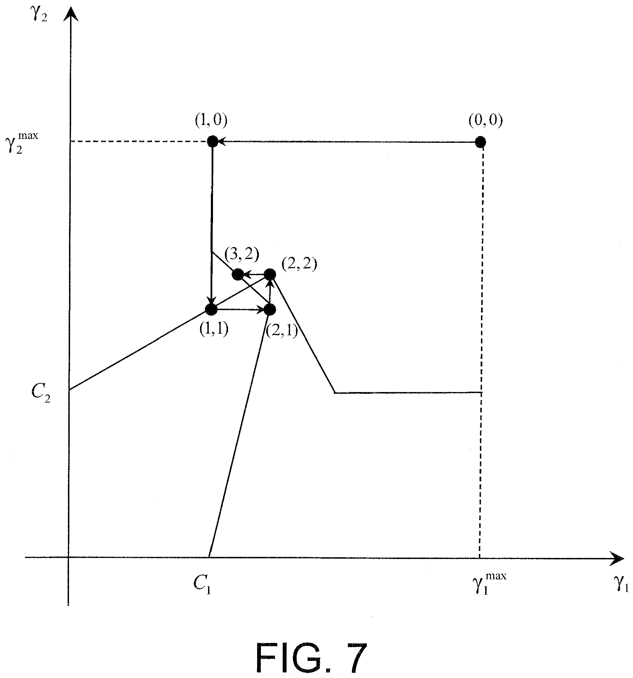

La Fig. 7 illustre sur le diagramme d'interférence, les points de fonctionnement des terminaux récepteur $R_1$ et $R_2$ à la suite de chaque demi-itération. Les points sont notés ici $(n',n'')$ où $n'$ et $n''$ sont respectivement les nombres de demi-itérations effectuées par $T_1$ et $T_2$. On remarque que ces points sont obtenus par des projections alternées sur les courbes $\wedge_1$ et $\wedge_2$.

On peut montrer qu'en règle générale les fonctions $\lambda_1$ et $\lambda_2$ sont $k$-lipschitzienne avec $k$<1. Par conséquent, la suite des points de coordonnées $\left( \gamma_1^{(n)}, \gamma_2^{(n)} \right)$ converge vers un point fixe ($\mathbb{R}^2$ étant un espace de Banach). On peut montrer que ce point fixe n'est autre que le point d'intersection des courbes $\Lambda_1$ et $\Lambda_2$, noté $\Gamma^* = \left( \gamma_1^*, \gamma_2^* \right)$ sur le diagramme. Ce point donne l'allocation optimale de puissance compte tenu des consignes de débit $\rho_1$ et $\rho_2$.

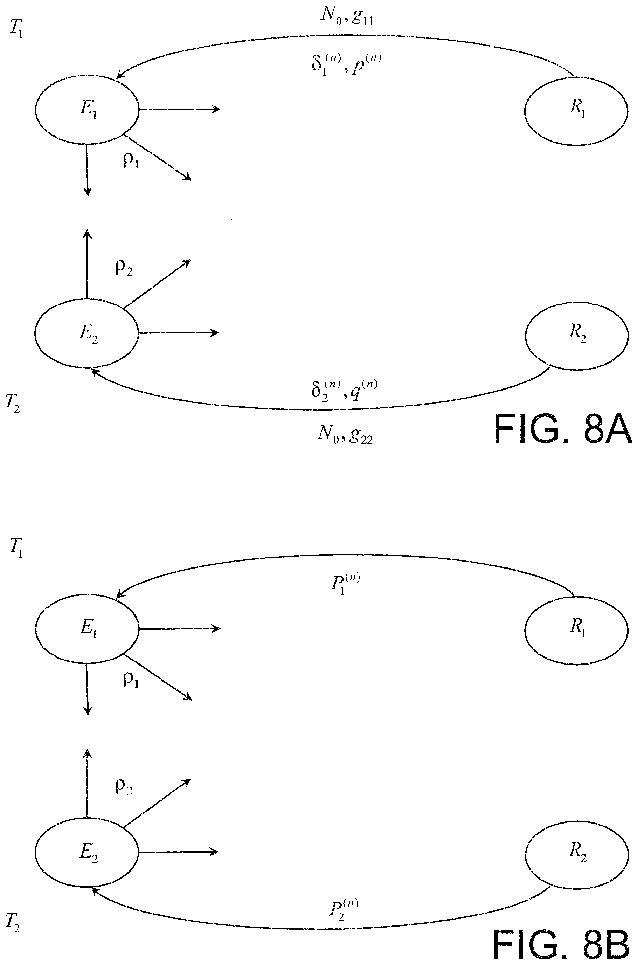

La Fig. 8A représente de manière schématique les échanges de messages entre les terminaux émetteur et récepteur des couples $T_1$=($E_1,R_1$) et $T_2$=($E_2,R_2$) lorsque la méthode d'allocation de puissance de la Fig. 6 est mise en oeuvre.

Lors de l'étape préliminaire 610, terminaux $E_1$ et $E_2$ diffusent les valeurs de débit $\rho_1$ et $\rho_2$. Alternativement, ceux-ci diffusent les valeurs des variables correspondantes $C_1$ et $C_2$. Les terminaux récepteur $R_1$ et $R_2$ envoient respectivement aux terminaux $E_1$ et $E_2$ les valeurs $N_0$, $g_{11}$ et $N_0$, $g_{22}$.

A chaque itération, le terminal $R_1$ transmet au terminal $E_1$ le niveau d'interférence $\delta_1^{(n)}$ et l'indice du régime correspondant, $p^{(n)}$. De même le terminal $R_2$ transmet au terminal $E_2$ le niveau d'interférence $\delta_2^{(n)}$ et l'indice du régime correspondant, $q^{(n)}$.

La Fig. 8B représente de manière schématique les échanges de messages entre les terminaux émetteur et récepteur des couples $T_1$=($E_1,R_1$) et $T_2$=($E_2,R_2$) lorsque la méthode d'allocation de puissance est mise en oeuvre selon la variante précitée.

Selon cette variante, les calculs de $P_1^{(n)}$ et $P_2^{(n)}$, respectivement aux étapes 640 et 670, sont effectués par les terminaux $R_1$ et $R_2$ en lieu et place des terminaux $E_1$ et $E_2$.

Dans ce cas, les valeurs $N_0$, $g_{11}$ et $N_0$, $g_{22}$ ne sont pas transmises lors de l'étape préliminaire 610. A chaque itération, le terminal $R_1$ transmet au terminal $E_1$ la valeur de puissance actualisée $P_1^{(n)}$ à l'étape 640, et le terminal $R_2$ transmet au terminal $E_2$ la valeur de puissance actualisée $P_2^{(n)}$ à l'étape 670.

La variante de la Fig. 8B sera préférée à celle de la Fig. 8A lorsque les terminaux récepteur sont des stations de base, c'est-à-dire des communications montantes. En revanche, pour des communications descendantes, on pourra opter pour la variante de la Fig. 8A pour soulager la charge de calcul des terminaux mobiles.

La méthode d'allocation de puissance selon le premier mode de réalisation de l'invention se généralise à un nombre quelconque $K$ de couples de terminaux et donc à un nombre $K$ de communications correspondantes. Le diagramme d'interférence de la Fig. 4 ou 5 est alors construit dans un espace à $K \geq 2$ dimensions et l'on a $P^K$ combinaisons possibles de P régimes d'interférence pour l'ensemble des $K$ communications du système. Les consignes de débit des $K$ communications forment un vecteur de débit $\rho$=$(\rho_1,...,\rho_K)^T$.

Selon un second mode de réalisation, non représenté, on regroupe les couples de terminaux émetteur et récepteur, $T_k$=($E_k,R_k$), $k$=1,...,$K$ par paires selon un critère prédéterminé. Par exemple, ce critère peut être un ordre de priorité, un degré d'urgence, un facteur de qualité de canal, etc. ou encore une combinaison de tels critères.

De préférence, dans une phase préalable, chaque terminal récepteur $R_k$ détermine quelle est la communication $k'$ induisant le plus fort niveau d'interférence. Pour ce faire, on active par exemple tour à tour les différents terminaux émetteur, autres que $E_k$, en leur allouant la même puissance d'émission $P^{com}$, et l'on compare les niveaux de réception obtenus. Les couples $T_k$ et $T_{k'}$ sont alors appariés. On notera que cette phase préalable nécessite au plus $C_K^2$ mesures, étant donné que celles-ci peuvent être effectuées en activant tour à tour les terminaux émetteur $E_k$ et en mesurant simultanément les niveaux reçus par les différents terminaux récepteur autres que $R_k$.

Pour une paire $(T_k, T_{k'})$ ainsi constituée, on pourra considérer que les autres paires ne sont que faiblement interférentes. L'interférence « résiduelle » due aux autres communications sera traitée comme du bruit thermique. Ce bruit thermique sera pris en compte dans la valeur de $N_0$ pour le calcul des puissances $P_k^*$ et $P_{k'}^*$ à allouer aux terminaux $E_k$ et $E_{k'}$.

La méthode d'allocation de puissance décrite en relation avec la Fig. 6 peut alors s'appliquer aux paires ainsi constituées. Plus précisément, les étapes 610 à 670 sont effectuées pour chacune de ces paires. On comprendra ainsi qu'une itération de l'algorithme est constituée encore de deux demi-itérations, les premiers couples des différentes paires effectuant le traitement de la première demi-itération et les seconds couples de ces mêmes paires effectuant le traitement de la seconde demi-itération.

Le critère d'arrêt est commun à l'ensemble des paires. Il peut être exprimé comme précédemment sous la forme d'un nombre maximal d'itérations et/ou d'une mesure de convergence. Dans ce dernier cas, on utilisera l'expression (30) au vecteur $\mathbf{P^{(n)}} = \left( P_1^{(n)}, ..., P_K^{(n)} \right)^T$ des puissances allouées respectivement aux $K$ terminaux d'émission à l'itération $n$.

Selon une variante non représentée, le critère d'arrêt peut être spécifique à chaque paire et être vérifié, de manière indépendante, pour chacune d'entre elles. Ceci permet notamment de ne pas retarder la convergence de la méthode d'allocation de puissance pour les paires bien conditionnées.

Avantageusement, on vérifiera également si les puissances allouées remplissent en outre un critère d'homogénéité. Il faut en effet éviter que certains terminaux transmettent à pleine puissance alors que d'autres sont réduits à être quasi-silencieux. Le critère d'homogénéité pourra notamment être libellé en termes de puissances d'émission minimale et maximale ou bien encore en termes de variance des puissances allouées. Si les puissances allouées ne sont pas homogènes, celles qui ne remplissent pas le critère d'homogénéité sont identifiées et les couples de terminaux correspondants sont rejetés. Ces couples pourront par exemple se voir allouer des ressources de transmission différentes.

Selon un troisième mode de réalisation, également non représenté, les couples de terminaux $T_k = (E_k, R_k)$, $k=1,...,K$ sont d'abord appariés comme dans le second mode de réalisation. Toutefois, à la différence du second mode de réalisation, on procède à une allocation de puissance paire par paire, chaque paire étant traitée de manière indépendante.

Selon une première variante de ce mode de réalisation, on considère que pour toute paire $(T_k, T_{k'})$, l'interférence induite par les autres communications $v \neq k,k'$ est négligeable. Afin de s'assurer que cette hypothèse est bien vérifiée, on pourra allouer une puissance nulle, aux autres terminaux $E_v$, $v \neq k,k'$ pendant que les communications $k$ et $k'$ seront actives.

Le procédé de sélection de la paire active $(T_k, T_{k'})$ peut être répété périodiquement, notamment pour tenir compte de l'évolution des coefficients de canal. Il peut être également répété pour respecter un principe d'équité, les couples constitutifs de la paire sélectionnée en dernier lieu étant alors exclus du processus de sélection pendant une période donnée. Cette période d'exclusion peut être fonction de la qualité de service requise pour la communication en question, une qualité de service d'autant plus élevée conduisant à une période d'exclusion d'autant plus courte.

Selon une seconde variante de ce mode de réalisation, on considère que pour toute paire $(T_k, T_{k'})$, l'interférence induite par les communications extérieures à celles de la paire en question peut être assimilée à du bruit thermique. Plus précisément, la puissance de bruit $N_0$, transmise le cas échéant aux terminaux émetteur, en 610, et entrant dans le calcul des rapports signal sur bruit et interférence sur bruit, en 620, est augmentée de la puissance de l'interférence induite par les communications $v \neq k,k'$.

Afin de s'assurer que cette hypothèse est bien vérifiée, on pourra allouer une puissance minimale $P^{min}$, aux autres terminaux $E_v$, $v \neq k,k'$ pendant que les communications $k$ et $k'$ seront actives. La sélection de la paire active pourra être effectuée comme dans la première variante.

La présente invention a été décrite comme une méthode distribuée d'allocation de puissance respectant une contrainte de débit donnée. L'homme du métier comprendra cependant qu'elle peut s'appliquer à une allocation de puissance respectant une contrainte portant sur un paramètre quelconque de qualité de service, par exemple un temps de latence maximal, un rayon de couverture minimal, un taux d'erreur maximal, etc. sans pour autant sortir du cadre de la présente invention.

**Revendications**

1. Méthode d'allocation de puissance pour système de télécommunication sans fil comprenant au moins un premier couple de terminaux constitué d'un premier terminal émetteur et d'un premier terminal récepteur et d'un second couple de terminaux constitué d'un second terminal émetteur et d'un second terminal récepteur, une première communication entre les terminaux du premier couple utilisant les mêmes ressources de transmission qu'une seconde communication entre les terminaux du second couple, de sorte que les deux communications interfèrent entre elles, la première communication devant respecter un premier débit de consigne et la seconde communication devant respecter un second débit de consigne, ladite méthode comprenant les étapes suivantes :

   on initialise (615) les puissances d'émission des premier et second terminaux émetteur à des valeurs prédéterminées ;
   on effectue une pluralité d'itérations jusqu'à ce qu'un critère d'arrêt soit satisfait (680), chaque itération comprenant une première pluralité d'étapes (620, 630, 640) effectuées par le premier couple de terminaux suivie d'une seconde pluralité d'étapes (650, 660, 670) effectuées par le second couple de terminaux, la première pluralité d'étapes comprenant :

   (a1) une estimation (620) par le premier terminal récepteur du rapport signal sur bruit ainsi que du rapport interférence sur bruit, le signal étant celui de la première communication et l'interférence étant induite par la seconde communication ;
   (b1) un calcul (630, 640) de la puissance minimale d'émission du premier terminal émetteur autorisant un premier débit de consigne, à partir des rapports estimés à l'étape précédente, le calcul de ladite puissance minimale d'émission du premier terminal émetteur faisant appel à un diagramme d'interférence de la première communication, ledit diagramme d'interférence représentant le rapport puissance sur bruit au niveau du premier récepteur en fonction du rapport interférence sur bruit et étant partitionné en différentes zones, chaque zone correspondant à un traitement distinct de l'interférence, la puissance minimale d'émission du premier terminal émetteur étant calculée à partir des premier et second débits de consigne, préalablement diffusés par les premier et second terminaux émetteur, d'une première fonction, $\lambda_1$, donnant le rapport signal sur bruit minimal permettant d'effectuer le traitement de l'interférence dans chacune de ces zones, et en déterminant une image par cette fonction du rapport interférence sur bruit mesurée à l'étape (a1) ;
   (c1) une actualisation (640) de la puissance d'émission du premier terminal émetteur à une valeur ainsi calculée ;

   la seconde pluralité d'étapes comprenant :

   (a2) une estimation (650) par le second terminal récepteur du rapport signal sur bruit ainsi que du rapport interférence sur bruit, le signal étant celui de la seconde communication et l'interférence étant induite par la première communication ;
   (b2) un calcul (650, 660) de la puissance minimale d'émission du second terminal émetteur autorisant le second débit de consigne, à partir des rapports estimés à l'étape précédente , le calcul de ladite puissance minimale d'émission du second terminal émetteur faisant appel à un diagramme d'interférence de la seconde communication, ledit diagramme d'interférence représentant le rapport puissance sur bruit au niveau du second récepteur en fonction du rapport interférence sur bruit et étant partitionné en différentes zones, chaque zone correspondant à un traitement distinct de l'interférence, la puissance minimale d'émission du second terminal émetteur étant calculée à partir des premier et second débits de consigne, préalablement diffusés par les premier et second terminaux émetteur, d'une seconde fonction, $\lambda_2$, donnant le rapport signal sur bruit minimal permettant d'effectuer le traitement de l'interférence dans chacune de ces zones, et en déterminant une image par cette fonction du rapport interférence sur bruit mesurée à l'étape (a2);
   (c2) une actualisation (670) de la puissance d'émission du second terminal émetteur à une valeur ainsi calculée.

2. Méthode d'allocation de puissance selon la revendication 1, **caractérisée en ce que** la puissance minimale d'émission, $P_1^{(n)}$, du premier terminal émetteur est calculée à la $n^{\text{ème}}$ itération par :

$$P_1^{(n)} = \lambda_1\left(\delta_1^{(n)}\right).\frac{N_0}{\left|g_{11}\right|^2}$$

où $\lambda_1$ est ladite première fonction, $N_0$ est la puissance de bruit thermique et $g_{11}$ est le coefficient de canal de la première communication, estimés par le premier terminal récepteur et $\delta_1^{(n)}$ est le rapport interférence sur bruit mesurée à l'étape (a1) de la $n^{ème}$ itération.

3. Méthode d'allocation de puissance selon la revendication 2, **caractérisée en ce que** le calcul de la puissance minimale d'émission $P_1^{(n)}$ est effectué par le premier terminal récepteur, la puissance minimale ainsi calculée étant transmise au premier terminal émetteur.

4. Méthode d'allocation de puissance selon la revendication 2, **caractérisée en ce que** le calcul de la puissance minimale d'émission $P_1^{(n)}$ est effectué par le premier terminal émetteur.

5. Méthode d'allocation de puissance selon la revendication 1, **caractérisée en ce que** la puissance minimale d'émission, $P_2^{(n)}$, du second terminal émetteur est calculée à la $n^{ème}$ itération par :

$$P_2^{(n)} = \lambda_2\left(\delta_2^{(n)}\right).\frac{N_0}{\left|g_{22}\right|^2}$$

où $\lambda_2$ est ladite seconde fonction, $N_0$ est la puissance de bruit thermique et $g_{22}$ est le coefficient de canal de la seconde communication, estimés par le second terminal récepteur et $\delta_2^{(n)}$ est le rapport interférence sur bruit mesurée à l'étape (a2) de la $n^{ème}$ itération.

6. Méthode d'allocation de puissance selon la revendication 5, **caractérisée en ce que** le calcul de la puissance minimale d'émission $P_2^{(n)}$ est effectué par le second terminal récepteur, la puissance minimale ainsi calculée étant transmise au premier terminal émetteur.

7. Méthode d'allocation de puissance selon la revendication 5, **caractérisée en ce que** le calcul de la puissance minimale d'émission $P_2^{(n)}$ est effectué par le second terminal émetteur.

8. Méthode d'allocation de puissance pour système de télécommunication sans fil comprenant une pluralité de couples de terminaux, chaque couple étant constitué d'un terminal émetteur et d'un terminal récepteur, **caractérisée en ce qu'**on alloue initialement la même puissance d'émission, $P^{com}$, aux terminaux émetteurs desdits couples, et que pour une communication, dite première communication entre les terminaux émetteur et récepteur d'un couple, dit premier couple, on détermine la communication, dite seconde communication, entre les terminaux émetteur et récepteur du couple, dit second couple, qui induit le plus fort niveau d'interférence sur la première communication, lesdits premier et second couples formant une paire, et que l'on effectue ensuite l'allocation de puissance aux premier et second terminaux au moyen de la méthode d'allocation selon l'une des revendications précédentes.

9. Méthode d'allocation de puissance selon la revendication 8, **caractérisée en ce que** l'on alloue une puissance d'émission réduite, $P^{min}$, aux terminaux émetteurs autres que ceux appartenant à ladite paire pendant le temps où les première et seconde communications sont actives et que l'on intègre dans l'estimation du bruit thermique l'interférence induite par les communications extérieures à ladite paire.

10. Méthode d'allocation de puissance selon la revendication 8, **caractérisée en ce que** l'on alloue une puissance d'émission nulle aux terminaux émetteurs autres que ceux appartenant à ladite paire pendant le temps où les première et seconde communications sont actives.

11. Méthode d'allocation de puissance selon l'une des revendications 8 à 10, **caractérisée en ce que** le premier couple de terminaux est choisi tour à tour parmi les couples de terminaux de ladite pluralité.

12. Méthode d'allocation de puissance selon l'une des revendications 8 à 10, **caractérisée en ce que** le premier couple de terminaux est choisi parmi les couples de terminaux de ladite pluralité selon un degré d'urgence, un ordre de priorité ou un facteur de qualité de canal de transmission.

**Patentansprüche**

1. Leistungszuordnungsverfahren für ein drahtloses Telekommunikationssystem, enthaltend zumindest ein erstes Paar von Endgeräten, das aus einem ersten Sendeendgerät und einem ersten Empfangsendgerät besteht, und zumindest ein zweites Paar von Endgeräten, das aus einem zweiten Sendeendgerät und einem zweiten Empfangsendgerät besteht, wobei bei einer ersten Kommunikation zwischen den Endgeräten des ersten Paares die gleichen Übertragungsressourcen wie bei einer zweiten Kommunikation zwischen den Endgeräten des zweiten Paares verwendet werden, so dass die beiden Kommunikationen miteinander interferieren, wobei bei der ersten Kommunikation eine erste Sollübertragungsrate und bei der zweiten Kommunikation eine zweite Sollübertragungsrate zu beachten ist, wobei das Verfahren die folgenden Schritte umfasst:

Initialisieren (615) der Sendeleistungen des ersten und des zweiten Sendeendgeräts mit vorbestimmten Werten; Ausführen von einer Mehrzahl von Iterationen, bis ein Stoppkriterium erfüllt ist (680), wobei jede Iteration eine erste Mehrzahl von Schritten (620, 630, 640) umfasst, die von dem ersten Paar von Endgeräten ausgeführt werden, gefolgt von einer zweiten Mehrzahl von Schritten (650, 660, 670), die von dem zweiten Paar von Endgeräten ausgeführt werden, wobei die erste Mehrzahl von Schritten umfasst:

(a1) Schätzen (620) des Signal-Rausch-Verhältnisses und des Interferenz-Rausch-Verhältnisses durch das erste Empfangsendgerät, wobei das Signal dasjenige der ersten Kommunikation ist und die Interferenz durch die zweite Kommunikation bewirkt wird;
(b1) Berechnen (630, 640) der minimalen Sendeleistung des ersten Sendeendgeräts, das eine erste Sollübertragungsrate zulässt, und zwar aus gehend von den Verhältnissen, die in dem vorhergehenden Schritt geschätzt wurden, wobei das Berechnen der minimalen Sendeleistung des ersten Sendeendgeräts unter Verwendung eines Interferenzmusters der ersten Kommunikation erfolgt, wobei das Interferenzmuster das Leistungs-Rausch-Verhältnis im Bereich des ersten Empfängers in Abhängigkeit von dem Interferenz-Rausch-Verhältnis darstellt und in verschiedene Bereiche unterteilt ist, wobei jeder Bereich einer bestimmten Interferenzverarbeitung entspricht, wobei die minimale Sendeleistung des ersten Sendeendgeräts ausgehend von der ersten und der zweiten Sollübertragungsrate berechnet wird, die zuvor durch das erste und das zweite Sendeendgerät angewendet wurden, und zwar von einer ersten Funktion $\lambda_1$, die das minimale Signal-Rausch-Verhältnis vorgibt, bei dem die Verarbeitung der Interferenz in jedem dieser Bereiche durchgeführt werden kann, und indem ein Bild durch diese Funktion des in Schritt (a1) ermittelten Interferenz-Rausch-Verhältnisses bestimmt wird;
(c1) Aktualisieren (640) der Sendeleistung des ersten Sendeendgeräts auf einen so berechneten Wert;

wobei die zweite Mehrzahl von Schritten umfasst:

(a2) Schätzen (650) des Signal-Rausch-Verhältnisses und des Interferenz-Rausch-Verhältnisses durch das zweite Empfangsendgerät, wobei das Signal dasjenige der zweiten Kommunikation ist und die Interferenz durch die erste Kommunikation bewirkt wird;
(b2) Berechnen (650, 660) der minimalen Sendeleistung des zweiten Sendeendgeräts, das die zweite Sollübertragungsrate zulässt, ausgehend von den in dem vorhergehenden Schritt geschätzten Verhältnissen, wobei die Berechnung der minimalen Sendeleistung des zweiten Sendeendgeräts unter Verwendung eines Interferenzmusters der zweiten Kommunikation erfolgt, wobei das Interferenzmuster das Leistung-Rausch-Verhältnis im Bereich des zweiten Empfängers in Abhängigkeit von dem Interferenz-Rausch-Verhältnis darstellt und in verschiedene Bereiche unterteilt ist, wobei jeder Bereich einer bestimmten Interferenzverarbeitung entspricht, wobei die minimale Sendeleistung des zweiten Sendeendgeräts ausgehend von der ersten und der zweiten Sollübertragungsrate berechnet wird, die zuvor durch das erste und das zweite Sendeendgerät angewendet wurden, und zwar von einer zweiten Funktion $\lambda_2$, die das minimale Signal-Rausch-Verhältnis vorgibt, wodurch die Verarbeitung der Interferenz in jedem dieser Bereiche durchgeführt werden kann, und indem ein Bild durch diese Funktion des in Schritt (a2) ermittelten Interferenz-Rausch-Verhältnisses bestimmt wird;

(c2) Aktualisieren (670) der Sendeleistung des zweiten Sendeendgeräts auf einen so berechneten Wert.

2. Leistungszuordnungsverfahren nach Anspruch 1, **dadurch gekennzeichnet, dass** die minimale Sendeleistung $P_1^{(n)}$ des ersten Sendeendgeräts bei der n-ten Iteration berechnet wird mit:

$$P_1^{(n)} = \lambda_1 \left( \delta_1^{(n)} \right) \cdot \frac{N_0}{\left| g_{11} \right|^2}$$

worin $\lambda_1$ die erste Funktion ist, No die thermische Rauschleistung ist und $g_{11}$ der Kanalkoeffizient der ersten Kommunikation ist, geschätzt durch das erste Empfangsendgerät, und $\delta_1^{(n)}$ das Interferenz-Rausch-Verhältnis ist, das in Schritt (a1) der n-ten Iteration ermittelt wird.

3. Leistungszuordnungsverfahren nach Anspruch 2, **dadurch gekennzeichnet, dass** das Berechnen der minimalen Sendeleistung $P_1^{(n)}$ durch das erste Empfangsendgerät erfolgt, wobei die so berechnete minimale Leistung dem ersten Sendeendgerät übertragen wird.

4. Leistungszuordnungsverfahren nach Anspruch 2, **dadurch gekennzeichnet, dass** das Berechnen der minimalen Sendeleistung $P_1^{(n)}$ durch das erste Sendeendgerät erfolgt.

5. Leistungszuordnungsverfahren nach Anspruch 1, **dadurch gekennzeichnet, dass** die minimale Sendeleistung $P_2^{(n)}$ des zweiten Sendeendgeräts bei der n-ten Iteration berechnet wird mit:

$$P_2^{(n)} = \lambda_2 \left( \delta_2^{(n)} \right) \cdot \frac{N_0}{\left| g_{22} \right|^2}$$

worin $\lambda_2$ die zweite Funktion ist, $N_0$ die thermische Rauschleistung ist und $g_{22}$ der Kanalkoeffizient der zweiten Kommunikation ist, geschätzt durch das zweite Empfangsendgerät, und $\delta_2^{(n)}$ das Interferenz-Rausch-Verhältnis ist, das in Schritt (a2) der n-ten Iteration ermittelt wird.

6. Leistungszuordnungsverfahren nach Anspruch 5, **dadurch gekennzeichnet, dass** das Berechnen der minimalen Sendeleistung $P_2^{(n)}$ durch das zweite Empfangsendgerät erfolgt, wobei die so berechnete minimale Leistung dem ersten Sendeendgerät übertragen wird.

7. Leistungszuordnungsverfahren nach Anspruch 5, **dadurch gekennzeichnet, dass** das Berechnen der minimalen Sendeleistung $P_2^{(n)}$ durch das zweite Sendeendgerät erfolgt.

8. Leistungszuordnungsverfahren für ein drahtloses Telekommunikationssystem, enthaltend eine Mehrzahl von Paaren von Endgeräten, wobei jedes Paar aus einem Sendeendgerät und einem Empfangsendgerät besteht, **dadurch gekennzeichnet, dass** ursprünglich den Sendeendgeräten der Paare die gleiche Sendeleistung Pcom zugeordnet wird, und dass für eine Kommunikation, erste Kommunikation genannt, zwischen dem Sende- und dem Empfangsendgerät eines Paares, erstes Paar genannt, die Kommunikation, zweite Kommunikation genannt, zwischen dem Sende- und dem Empfangsendgerät des Paares, zweites Paar genannt, bestimmt wird, die den höchsten Interferenzpegel bei der ersten Kommunikation bewirkt, wobei das erste und das zweite Paar eine Paaranordnung bilden, und dass dann die Leistungszuordnung zu dem ersten und dem zweiten Endgerät mittels des Zuordnungsverfahrens nach einem der vorangehenden Ansprüche durchgeführt wird.

9. Leistungszuordnungsverfahren nach Anspruch 8, **dadurch gekennzeichnet, dass** eine reduzierte Sendeleistung P$^{min}$ den anderen Sendeendgeräten zugeordnet wird, als denjenigen, die zu der Paaranordnung während der Zeit gehören, wo die erste und die zweite Kommunikation aktiv sind, und dass bei der Schätzung des thermischen Rauschens die Interferenz mit einbezogen wird, die von den Kommunikationen außerhalb der Paaranordnung bewirkt wird.

10. Leistungszuordnungsverfahren nach Anspruch 8, **dadurch gekennzeichnet, dass** eine Sendeleistung gleich null den anderen Sendeendgeräten zugeordnet wird, als denjenigen, die zu der Paaranordnung während der Zeit gehören, wo die erste und die zweite Kommunikation aktiv sind.

11. Leistungszuordnungsverfahren nach einem der Ansprüche 8 bis 10, **dadurch gekennzeichnet, dass** das erste Endgerätepaar der Reihe nach aus den Endgerätepaaren der genannten Mehrzahl ausgewählt wird.

12. Leistungszuordnungsverfahren nach einem der Ansprüche 8 bis 10, **dadurch gekennzeichnet, dass** das erste Endgerätepaar aus den Endgerätepaaren der genannten Mehrzahl nach einem Dringlichkeitsgrad, einem Prioritätsbefehl oder einem Qualitätsfaktor des Übertragungskanals ausgewählt wird.

## Claims

1. A power allocation method for a wireless telecommunication system comprising at least a first couple of terminals consisting of a first transmitting terminal and of a first receiving terminal and of a second couple of terminals consisting of a second transmitting terminal and a second receiving terminal, a first communication between the terminals of the first couple using the same transmission resources as a second communication between the terminals of the second couple, such that the two communications interfere with one another, the first communication being required to satisfy a first prescribed throughput and the second communication being required to satisfy a second prescribed throughput, said method comprising the following steps:

the output powers of the first and second transmitting terminals are initialized (615) to predetermined values;
a plurality of iterations is carried out until a stop criterion is satisfied (680), each iteration comprising a first plurality of steps (620, 630, 640) carried out by the first couple of terminals, followed by a second plurality of steps (650, 660, 670) carried out by the second couple of terminals, the first plurality of steps comprising:

(a1) an estimate (620) by the first receiving terminal of the signal-to-noise ratio and of the interference-to-noise ratio, the signal being that of the first communication and the interference being induced by the second communication;
(b1) calculation (630, 640) of the minimum output power of the first transmitting terminal allowing a first prescribed throughput, based on the ratios estimated in the preceding step, the calculation of the minimum output power of the first transmitting terminal involving an interference diagram of the first communication, said interference diagram representing the power to noise ratio at the first receiver as a function of the interference to noise ratio and being a partitioned into different zones, each zone corresponding to a distinct type of treatment of the interference, the minimum power output of the first transmitting terminal being calculated based on the first and second prescribed throughputs, previously broadcasted by the first and second transmitting terminals, a first function, $\lambda_1$, giving the minimum signal-to-noise ratio allowing the treatment of the interference in each of said zones to be carried out, and by determining an image by this function of the interference-to-noise ratio measured in step (a1);
(c1) an update (640) of the output power of the first transmitting terminal to a value thus calculated;

the second plurality of steps comprising:

(a2) an estimate (650) by the second receiving terminal of the signal-to-noise ratio and of the interference-to-noise ratio, the signal being that of the second communication and the interference being induced by the first communication;
(b2) calculation (650, 660) of the minimum output power of the second transmitting terminal allowing the second prescribed throughput, based on the ratios estimated in the preceding step, the calculation of said minimal power output of said second transmitting terminal involving an interference diagram of the second communication, said interference diagram representing the power to noise ratio at the second receiver as a function of the interference to noise ratio and being a partitioned into different zones, each zone corresponding to a distinct type of treatment of the interference, the minimum power output of the second transmitting terminal being calculated based on the first and second prescribed throughputs, previously broadcasted by the first and second transmitting terminals, a second function, $\lambda_2$, giving the minimum signal-to-noise ratio allowing the treatment of the interference in each of said zones to be carried out, and by determining an image by this function of the interference-to-noise ratio measured in step (a2) ;

(c2) an update (670) of the output power of the second transmitting terminal to a value thus calculated.

2. A power allocation method according to claim 1, **characterized in that** the minimum output power, $P_1{}^{(n)}$, of the first transmitting terminal is calculated in the n$^{th}$ iteration by:

$$P_1^{(n)} = \lambda_1\left(\delta_1^{(n)}\right).\frac{N_0}{\left|g_{11}\right|^2}$$

where $\lambda_1$ is said first function, No is the thermal noise power and $g_{11}$ is the channel coefficient of the first communication, estimated by the first receiving terminal and $\delta_1^{(n)}$ is the interference-to-noise ratio measured in step (a1) of the n$^{th}$ iteration.

3. A power allocation method according to claim 2, **characterized in that** the calculation of the minimum output power $P_1{}^{(n)}$ is performed by the first receiving terminal, the minimum power thus calculated being transmitted to the first transmitting terminal.

4. A power allocation method according to claim 2, **characterized in that** the calculation of the minimum output power $P_1{}^{(n)}$ is performed by the first transmitting terminal.

5. A power allocation method according to claim 1, **characterized in that** the minimum output power, $P_2^{(n)}$, of the second transmitting terminal is calculated in the n$^{th}$ iteration by:

$$P_2^{(n)} = \lambda_2\left(\delta_2^{(n)}\right).\frac{N_0}{\left|g_{22}\right|^2}$$

where $\lambda_2$ is said second function, $N_0$ is the thermal noise power and $g_{22}$ is the channel coefficient of the second communication, estimated by the second receiving terminal and $\delta_2^{(n)}$ is the interference-to-noise ratio measured in step (a2) of the n$^{th}$ iteration.

6. A power allocation method according to claim 5, **characterized in that** the calculation of the minimum output power $P_2^{(n)}$ is performed by the second receiving terminal, the minimum output power thus calculated being transmitted to the first transmitting terminal.

7. A power allocation method according to claim 5, **characterized in that** the calculation of the minimum output power $P_2^{(n)}$ is performed by the second transmitting terminal.

8. A power allocation method for a wireless telecommunication system comprising a plurality of couples of terminals, each couple consisting of a transmitting terminal and a receiving terminal, **characterized in that** the same output power, $P^{com}$, is initially allocated to the transmitting terminals of said couples, and that for a communication, called the first communication between the transmitting and receiving terminals of a couple, called the first couple, the communication is determined, called the second communication, between the transmitting and receiving terminals of the couple called the second couple, which induces the highest level of interference on the first communication, said first and second couples constituting a pair, and power allocation to the first and second terminals is then performed by means of the allocation method according to one of the foregoing claims.

9. A power allocation method according to claim 8, **characterized in that** a reduced output power, $P^{min}$, is allocated to the transmitting terminals other than those belonging to said pair during the time when the first and second communications are active and that the interference induced by the communications outside said pair is integrated into the estimate of the thermal noise.

10. A power allocation method according to claim 8, **characterized in that** zero output power is allocated to the transmitting terminals other than those belonging to said pair during the time when the first and second communications are active.

11. A power allocation method according to one of claims 8 through 10, **characterized in that** the first couple of terminals is selected successively from among the couples of terminals of said plurality.

12. A power allocation method according to one of claims 10 through 10, **characterized in that** the first couple of terminals is selected from among the couples of terminals of said plurality according to a degree of urgency, an order of priority or a transmission channel quality factor.

FIG. 1

FIG. 2

FIG. 3

FIG. 4

FIG. 5

diffusion de $\rho_1, \rho_2$ par $E_1, E_2$
transmission de $N_0$ et $g_{11}$ par $R_1$
transmission de $N_0$ et $g_{22}$ par $R_2$ — 610

initialisation de $P_1, P_2$
$n = 1$ — 615

estimation de $\gamma_1^{(n)}$ et $\delta_1^{(n)}$ par $R_1$
classification de l'interférence dans $\omega_{p^{(n)}}^1$ — 620

notification à $E_1$ de $\delta_1^{(n)}$ et $p^{(n)}$ — 630

actualisation de $P_1^{(n)}$ — 640

estimation de $\gamma_2^{(n)}$ et $\delta_2^{(n)}$ par $R_2$
classification de l'interférence dans $\omega_{q^{(n)}}^2$ — 650

notification à $E_2$ de $\delta_2^{(n)}$ et $q^{(n)}$ — 660

actualisation de $P_2^{(n)}$ — 670

685

$n = n + 1$ ← N — critère d'arrêt satisfait ? — 680 — Y → fin — 690

# FIG. 6

FIG. 7

FIG. 8A

FIG. 8B

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2010064110 A

**Littérature non-brevet citée dans la description**

- **JONG-SHI PANG et al.** Distributed power allocation with rates constraints in Gaussian parallel interference channels. *IEEE Trans. on Information Theory,* Août 2008, vol. 54 (8), 3471-3489

- **SHIH-CHUN CHANG et al.** Coding for T-User Multiple-Access Channels. *IEEE Transactions on Information Theory,* Novembre 1979, vol. IT-25 (6), 684-691